# EUROPEAN PATENT APPLICATION

(11) **EP 4 718 612 A1**
(43) Date of publication of application: **01.04.2026**
(21) Application number: 24934263.5
(22) Date of filing: 26.11.2024
(51) Int. Cl.: H01M 50/367, H01M 50/317, H01M 50/204, H01M 50/249, F16B 37/04, F16B 33/00

(54) **BATTERY PACK AND VEHICLE INCLUDING SAME**

(30) Priority: 05.04.2024 KR 20240046651
(71) Applicant: LG Energy Solution, Ltd., Seoul 07335 (KR)
(72) Inventor: LEE, Sang-Joon, Daejeon 34122 (KR); RO, Yong-Hwan, Daejeon 34122 (KR); MUN, Jeong-O, Daejeon 34122 (KR); PARK, Shin-Young, Daejeon 34122 (KR); HWANG, Tae-Won, Daejeon 34122 (KR)
(74) Representative: Plasseraud IP
(86) International application number: PCT/KR2024/018890
(87) International publication number: WO 2025/211529

(57) **Abstract**

Disclosed are a battery pack and a vehicle including the same. A battery pack according to an embodiment of the present disclosure may include: a plurality of battery modules having a plurality of battery cells stacked therein; a pack case configured to store the plurality of battery modules; and a fastening member configured to fasten the pack case, wherein at least a portion of the fastening member is inserted and fixed into the pack case, and at least a portion thereof melts or burns when temperature rises.

## Description

### TECHNICAL FIELD

This application is based on and claims priority from Korean Patent Application No. 10-2024-0046651, filed on April 05, 2024, with the Korean Intellectual Property Office, the disclosure of which is incorporated herein in its entirety by reference.

The present disclosure relates to a battery pack and a vehicle including the same and, more specifically, to a battery pack enabling heat to spread evenly and gas to be discharged smoothly when a thermal event occurs, and a vehicle including the same.

### BACKGROUND ART

In general, secondary batteries refer to batteries capable of being repeatedly charged and discharged, such as lithium-ion batteries, lithium-polymer batteries, nickelcadmium batteries, nickel-hydrogen batteries, nickel-zinc batteries, and the like. A battery cell, which is the most fundamental secondary battery, may provide an output voltage of approximately 2.5V to 4.2V.

Recently, the secondary batteries have been applied to devices that require high output voltage and a large amount of charging capacity, such as electric vehicles or ESSs (Energy Storage Systems), and accordingly, a battery module configured by connecting a plurality of battery cells in series, parallel, or a combination thereof and a battery pack configured by reconnecting these battery modules in series, parallel, or a combination thereof, have been widely used.

Lithium secondary batteries are currently in the spotlight due to their advantages such as high operating voltage and significantly high energy density. However, since lithium secondary batteries use organic electrolytes, they have problems in which overcharge may cause overcurrent and overheating, leading to explosion or fire in worst cases.

Various types of secondary batteries have a battery module including a module case capable of protecting a plurality of battery cells stored therein, and a battery pack including the plurality of battery modules.

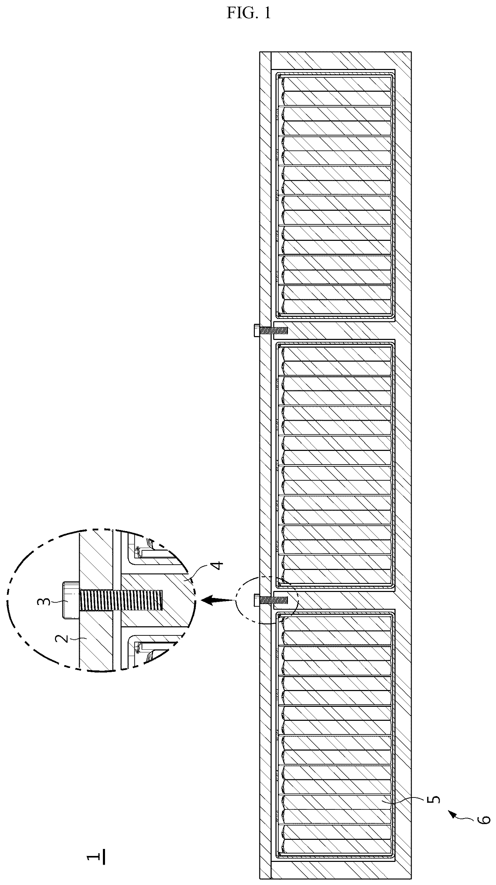

FIG. 1 is a cross-sectional view of a conventional battery pack.

Referring to FIG. 1, in the case of a conventional battery pack 1, an upper frame 2 is fixed to a partition frame 4 by a bolt 3. That is, since the upper frame 2 of the conventional battery pack 1 is firmly fixed by the bolt 3, it is unable to provide, when a flame occurs, free space or buffer space through which heat or gas caused by the flame can move.

In this state, if a flame occurs in the battery cell 5, the heat caused by the flame is blocked by the upper frame 2 and concentrated in the battery module 6 where the flame occurred, instead of spreading. In addition, the gas generated inside the battery module 6 cannot be discharged, so the internal pressure increases, so that the risk of explosion of the battery module 6 or battery pack 1 increases.

In this case, if an explosion occurs in the battery module 6 where the flame occurred, the flame may spread to other battery modules 6, causing thermal runaway. Furthermore, if the flame leaks to the outside due to the thermal runaway, the driver of the electric vehicle may be burned or put in a dangerous situation.

In addition, the battery module 6 or battery pack 1 will be damaged or completely burned by a chain reaction of flames due to flame propagation, so that the stability of the battery module 6 or battery pack 1 cannot be secured.

### DISCLOSURE

### Technical Problem

The present disclosure is designed to solve the problems of the related art, and therefore the present disclosure is directed to providing a battery pack enabling, when a flame occurs in a battery cell, heat caused by the flame to spread evenly inside the battery pack, thereby preventing heat concentration and attaining uniform thermal distribution, and a vehicle including the same.

In addition, the present disclosure is to provide a battery pack capable of facilitating venting to easily discharge gas, and a vehicle including the same.

In addition, the present disclosure is to provide a battery module capable of preventing a chain reaction of flames caused by flame propagation, thereby preventing thermal runaway, and a battery pack and vehicle including the same.

However, the technical problems that the present disclosure seeks to solve are not limited to the above-mentioned problems, and other problems not mentioned above will be clearly understood by those skilled in the art from the description of the invention described below.

### Technical Solution

In one aspect of the present disclosure, there is provided a battery pack including: a plurality of battery modules having a plurality of battery cells stacked therein; a pack case configured to store the plurality of battery modules; and a fastening member configured to fasten the pack case, wherein at least a portion of the fastening member is inserted and fixed into the pack case, and at least a portion thereof melts or burns when temperature rises.

In an embodiment, a coupling hole may be formed in the pack case, and the fastening member may include a bolt and a first nut, and the first nut may be made of a melting or burning material and may be inserted and fixed into the coupling hole of the pack case.

In an embodiment, the first nut may be coupled to the coupling hole of the pack case by fitting.

In an embodiment, the first nut may be made of plastic.

In an embodiment, a bushing may be coupled to the pack case on an upper side of the first nut to prevent damage to the first nut and increase fixing force.

In an embodiment, the bolt may be coupled to the first nut by passing through the bushing.

In an embodiment, the bushing may be welded to the pack case.

In an embodiment, an outer diameter of the bushing may be greater than an outer diameter of the first nut.

In an embodiment, the pack case may include: an upper frame; and a partition frame fastened to the upper frame by the fastening member, wherein the coupling hole may be formed in the partition frame, and the first nut may be inserted and fixed into the coupling hole of the partition frame.

In an embodiment, the fastening member may include a second nut coupled to the upper frame, and the bolt may be fastened to both the first nut and the second nut.

In an embodiment, the second nut may be welded to the upper frame.

In an embodiment, the second nut may be in a separated state from the partition frame.

In an embodiment, if a flame occurs in the battery cell and if the first nut melts, the bolt may be separated from the partition frame, and the upper frame may be deformed upward, so that a buffer space may be formed between the upper frame and the battery module.

In an embodiment, a venting unit may be formed in the pack case, and gas generated from the battery cell may move to the venting unit if the upper frame is deformed.

In another aspect of the present disclosure, there is provided a vehicle including at least one battery pack described above.

### Advantageous Effects

The embodiments of the present disclosure have the effect of enabling, when a flame occurs in a battery cell, heat caused by the flame to spread evenly inside the battery pack, thereby preventing heat concentration and attaining uniform thermal distribution.

In addition, the embodiments of the present disclosure have the effect of facilitating venting to easily discharge gas.

In addition, the embodiments of the present disclosure have the effect of preventing a chain reaction of flames caused by flame propagation, thereby preventing thermal runaway.

However, the effects obtainable from the present disclosure are not limited to the above-mentioned effects, and other effects not mentioned above will be clearly understood by those skilled in the art from the description of the invention described below.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a cross-sectional view of a conventional battery pack.
FIG. 2 is an exploded perspective view of a battery pack according to an embodiment of the present disclosure.
FIG. 3 is a cross-sectional view of a battery pack in which a bolt is separated from a first nut fixed inside a partition frame according to an embodiment of the present disclosure.
FIG. 4 is a drawing illustrating the bolt coupled to the first nut fixed inside the partition frame in FIG. 3.
FIG. 5 is a drawing illustrating the first nut melting so that the upper frame and the bolt are separated from the partition frame in FIG. 4.
FIG. 6 is a cross-sectional view illustrating a buffer space formed by deformation of an upper frame due to melting of a first nut in a battery pack according to an embodiment of the present disclosure.
FIG. 7 is a partially perspective view of a battery pack according to a modified embodiment of the present disclosure.
FIG. 8 is a drawing illustrating a vehicle including a battery pack according to embodiments of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure, so it should be understood that other equivalents and modifications could be made thereto without departing from the scope of the disclosure.

The sizes of respective elements or specific parts of each element shown in the attached drawings are exaggerated, omitted, or simplified for convenience of explanation and clarification thereof. Accordingly, the sizes of respective elements do not entirely reflect their actual sizes. Descriptions of related known functions or configurations, which may obscure the subject matter of the present disclosure, will be omitted.

In this specification, the expression "an element is 'connected' or 'coupled' to another element" should be understood that the elements may be directly connected or coupled to each other and that the two elements may be indirectly connected or coupled to each other through a connection member therebetween.

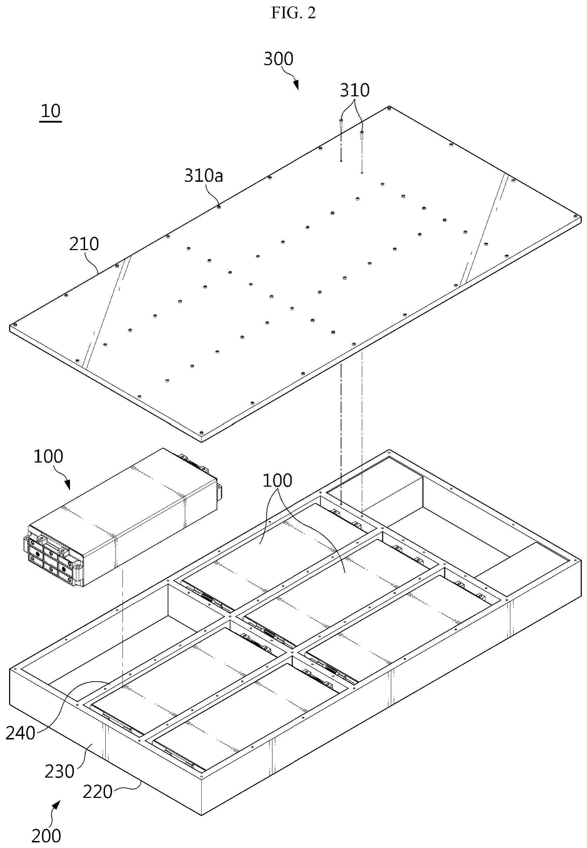

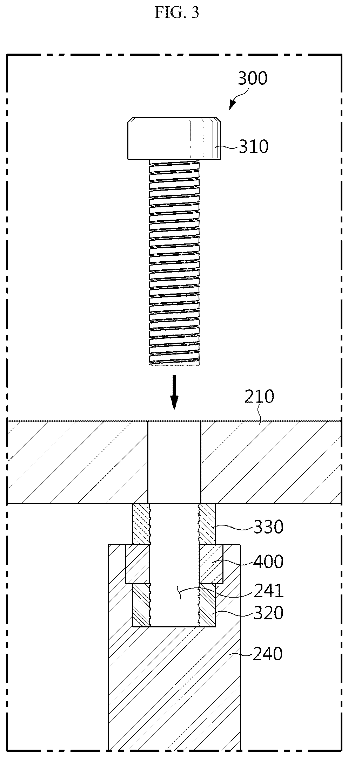

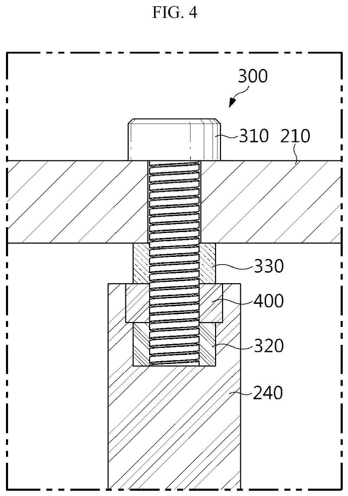

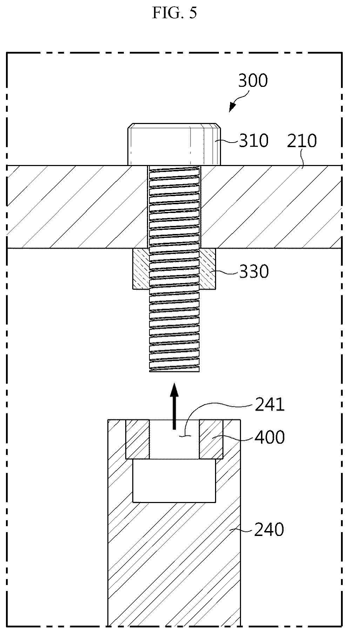

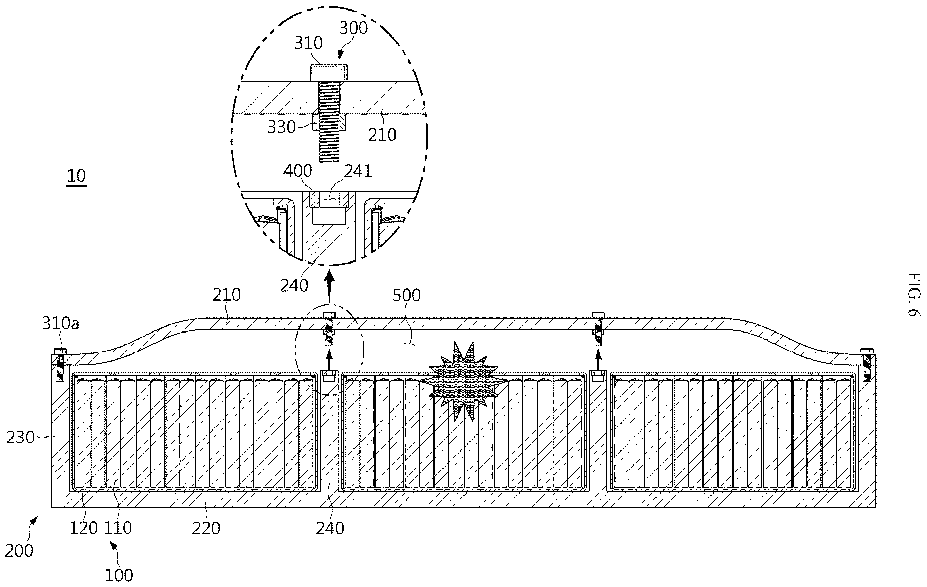

FIG. 2 is an exploded perspective view of a battery pack according to an embodiment of the present disclosure, FIG. 3 is a cross-sectional view of a battery pack in which a bolt is separated from a first nut fixed inside a partition frame according to an embodiment of the present disclosure, FIG. 4 is a drawing illustrating the bolt coupled to the first nut fixed inside the partition frame in FIG. 3, FIG. 5 is a drawing illustrating the first nut melting so that the upper frame and the bolt are separated from the partition frame in FIG. 4, and FIG. 6 is a cross-sectional view illustrating a buffer space formed by deformation of an upper frame due to melting of a first nut in a battery pack according to an embodiment of the present disclosure.

Referring to FIG. 2, a battery pack 10 according to an embodiment of the present disclosure may be configured to include a plurality of battery modules 100, a pack case 200, and a fastening member 300.

The battery module 100 is stored in the pack case 200. In addition, each battery module 100 may have multiple battery cells 110 (see FIG. 60) stacked therein, and multiple battery modules 100 may be arranged in various ways. For example, the battery module 100 may be arranged in horizontal and vertical directions, but is not limited thereto.

The battery module 100 may be provided with multiple battery cells 110 and a module case 120 (see FIG. 6).

The multiple battery cells 110 may be stacked on each other. The battery cell 110 may have various structures, and the multiple battery cells 110 may be stacked in various ways.

The battery cell 110 may have a structure in which a plurality of unit cells, configured as positive electrode plate-separator-negative electrode plate sequentially laminated, or a plurality of bi-cells, configured as positive electrode plate-separator-negative electrode plate-separator-positive electrode plate-separator-negative electrode plate sequentially laminated, are stacked depending on the battery capacity.

The battery cell 110 may be provided with an electrode lead. The electrode lead is a kind of terminal exposed to the outside and connected to an external device, and may be made of a conductive material. The electrode lead may include a positive electrode lead and a negative electrode lead.

The positive electrode lead and the negative electrode lead may be disposed in opposite directions along the longitudinal direction of the battery cell 110, or the positive electrode lead and the negative electrode lead may be positioned in the same direction along the longitudinal direction of the battery cell 110.

The battery cell 110 may be provided with a plurality of cartridges (not shown) that store the battery cell 110. Each cartridge (not shown) may be manufactured by plastic-injection molding, and the plurality of cartridges (not shown) having a storage portion formed to store the battery cell 110 may be stacked. A cartridge assembly in which the plurality of cartridges (not shown) are stacked may be provided with connector elements or terminal elements.

The connector elements may include various types of electrical connection parts or connection members for connection with, for example, a BMS (Battery Management System) (not shown) or the like that may provide data on the voltage or temperature of the battery cell 110.

In addition, the terminal elements may include a positive electrode terminal and a negative electrode terminal as main terminals connected to the battery cell 110. The terminal element may be provided with a terminal bolt for electrical connection with an external device. Meanwhile, the battery cell 110 may have various shapes.

A plurality of battery cells 110 are stacked and stored in the module case 120. The module case 120 may surround the plurality of battery cells 110 to protect the battery cells 110 from external vibrations or impacts.

The module case 120 may be formed in a shape corresponding to the shape of a stack in which the plurality of battery cells 110 are stacked. For example, if the stack in which the plurality of battery cells 110 are stacked is formed in a hexahedral shape, the module case 120 may also be formed in a hexahedral shape corresponding thereto. However, it is not limited thereto. Here, the module case 120 may include an upper module case 120, a lower module case 120, and a side module case 120.

In addition, the module case 120 may be manufactured by, for example, bending a metal plate, so that the module case 120 may be manufactured in an integral form. If the module case 120 is manufactured in an integral form, the coupling process may be simplified. Alternatively, the module case 120 may be provided as separate parts and then coupled to each other by welding. However, the material of the module case 120 is not limited to a metal material.

A plurality of battery modules 100 may be stored in the pack case 200. The pack case 200 may be configured to include, for example, an upper frame 210, a lower frame 220, a side frame 230, and a partition frame 240.

Referring to FIG. 2 and FIG. 6, the upper frame 210 may be coupled to the side frame 230 and the partition frame 240. Here, the partition frame 240 is fastened by a fastening member 300 configured to melt or burn at least in part when the temperature rises. For example, the fastening member 300 may have a bolt 310 and a first nut 320, wherein the first nut 320 is configured to melt or burn by flame, and the bolt 310 may be a general bolt, or may be a bolt configured to melt or burn by flame.

In addition, the upper frame 210 may be fixed to the side frame 230 by a generally used bolt 310a (see FIG. 2).

That is, when a thermal event occurs in the battery cell 110, although the upper frame 210 is fixed to the side frame 230 by a general bolt 310a, the first nut 320 of the fastening member 300 that fastens the partition frame 240 may melt or burn, so that the upper frame 210 may be separated from the partition frame 240 in the thermal event situation (see FIG. 6), and thus a buffer space 500 may be formed between the upper frame 210 and the partition frame 240. This will be described in more detail later.

The lower frame 220 may be configured to have a plurality of battery modules 100 seated thereon. Although the lower frame 220 may be formed in a square plate, but is not limited thereto. The lower frame 220 forms the bottom of the pack case 200.

The side frame 230 may be configured to extend upward from the edge of the lower frame 220. The side frame 230 may define the height of the pack case 200 and form a preset space between the same and the lower frame 220.

In addition, a plurality of battery modules 100 may be provided in the space between the side frame 230 and the lower frame 220. The side frame 230 may include a relatively long side frame 230 and a relatively short side frame 230. Alternatively, the lengths of the side frames 230 may be the same.

The partition frame 240 may extend upward inside the lower frame 220 and may be coupled to the side frame 230. One or more partition frames 240 may be provided, and battery modules 100 may be disposed between multiple partition frames 240 or between the partition frame 240 and the side frame 230. Here, the partition frames 240 may be arranged in the horizontal or vertical direction inside the side frame 230.

In addition, referring to FIG. 3, a coupling hole 241 may be formed in the partition frame 240 so that the upper frame 210 is fastened by the fastening member 300.

The fastening member 300 is configured to fasten the upper frame 210 of the pack case 200. Here, at least a portion of the fastening member 300 may be inserted and fixed into the pack case 200. Referring to FIG. 3, for example, the fastening member 300 may include a bolt 310 and a first nut 320, and the first nut 320 may be inserted and fixed into the coupling hole 241 of the partition frame 240 of the pack case 200. For example, the first nut 320 may be firmly coupled and fixed into the coupling hole 241 of the partition frame 240 by a fitting connection (e.g., a forcible fitting manner).

In addition, the fastening member 300 is configured to melt or burn in at least part thereof when the temperature rises. For example, the first nut 320 of the fastening member 300 may be configured to melt or burn. That is, in the battery pack 10 according to an embodiment of the present disclosure, the first nut 320 may be configured to melt or burn when the temperature rises due to the occurrence of a flame.

In addition, as described above, the first nut 320 configured to melt or burn due to a temperature rise and the bolt 310 fastened to the first nut 320 may fasten the upper frame 210 and the partition frame 240. Here, the bolt 310 may be a general bolt or a bolt configured to melt or burn by flame.

The fastening member 300 may be configured variously. However, for the convenience of explanation, the following description will be made based on the fastening member 300 including the general bolt 310 and the first nut 320 configured to melt or burn due to a temperature rise.

Referring to FIGS. 3 and 4, as described above, the first nut 320 is inserted into and fixed to the coupling hole 241 of the partition frame 240. In addition, the first nut 320 may be made of various types of materials that melt or burn.

That is, the first nut 320 may be formed of various materials so that at least a part thereof melts or burns when the temperature rises, and for example, it may be made of various plastic materials capable of melting at a preset temperature, but is not limited thereto.

Here, a bushing 400 may be coupled to the partition frame 240 of the pack case 200. That is, in order to prevent damage to the first nut 320 and increase the fixing force, for example, the bushing 400 may be coupled to the coupling hole 241 of the partition frame 240 so as to be positioned on the upper side of the first nut 320.

In addition, in this structure, the bolt 310 may be connected to the first nut 320 by passing through the bushing 400.

The bushing 400 may be connected to the partition frame 240 of the pack case 200 in various ways, for example, by welding, but is not limited thereto. For example, like the first nut 320, the bushing 440 may also be coupled to the coupling hole 241 of the partition frame 240 in a forcible fitting manner.

In addition, as shown in FIG. 5, the outer diameter of the bushing 400 on the first nut 320 may be configured to be greater than the outer diameter of the first nut 320 in order to support the first nut 320.

In addition, the fastening member 300 may include a second nut 330 coupled to the upper frame 210, and in this case, the bolt 310 may be fastened to the first nut 320 and the second nut 330, respectively.

As described above, the second nut 330 may be coupled to the upper frame 210 in various ways, and for example, it may be coupled by welding, but is not limited thereto.

In FIG. 4, the second nut 330 is only in contact with the partition frame 240, instead of being coupled thereto, and is in a separated state from the partition frame 240. Although the second nut 330 and the partition frame 240 are in contact with each other in FIG. 4, the second nut 330 and the partition frame 240 may be spaced a predetermined distance apart from each other.

Referring to FIG. 4, the bolt 310 may be preferentially coupled to the second nut 330 coupled to the upper frame 210, thereby fastening the upper frame 210 and the partition frame 240, and then the bolt 310 is also coupled to the first nut 320, thereby further fastening the upper frame 210 and the partition frame 240.

Here, when a thermal event occurs in the battery cell 110, the first nut 320 may melt and burn. In addition, as shown in FIG. 5, when the first nut 320 coupled to the bolt 310 melts, the fastening force of the bolt 310 weakens, so that the upper frame 210, together with the bolt 310, may be separated from the partition frame 240.

Referring to FIG. 6, when a flame occurs in the battery cell 110 and then the first nut 320 melts, the bolt 310 may be separated from the partition frame 240, so that the upper frame 210 may be deformed upward, thereby forming a buffer space 500 between the upper frame 210 and the battery module 100.

That is, the upper frame 210 is deformed upward by the flame and gas generated in the battery cell 110 to form a buffer space 500, so that the heat may spread from the flame to other battery modules 100 through the buffer space 500, thereby attaining a uniform thermal distribution overall and preventing heat from being concentrated on a specific battery module 100.

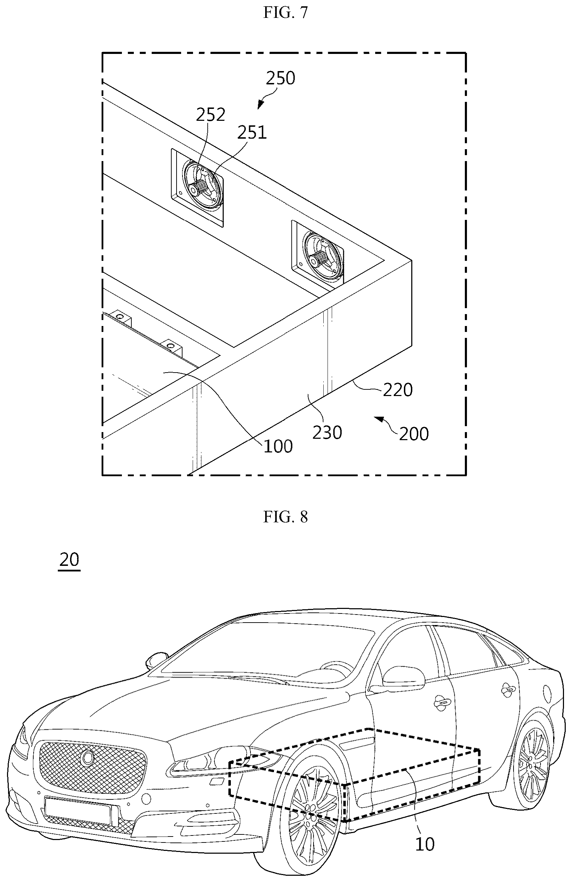

FIG. 7 is a partially perspective view of a battery pack according to a modified embodiment of the present disclosure.

Referring to FIG. 7, the modified embodiment of the present disclosure is different from the previous embodiment in that a venting unit 250 is formed in the pack case 200. However, some descriptions of the previous embodiment, which are common with the modified embodiment, will also be applied to the modified embodiment. In addition, some descriptions of the modified embodiment, which are applicable to the previous embodiment, may be applied to the previous embodiment.

Referring to FIG. 7, a venting unit 250 may be formed in the pack case 200. As described above, when the temperature rises and then the first nut 320 melts so that the upper frame 210 is deformed, gas generated from the battery cell 110 may move to the venting unit 250 and be discharged.

The venting unit 250 may include a venting hole 251 and a venting valve 252. The venting hole 251 is a hole through which gas generated from the battery cell 110 is discharged, and may be formed in the pack case 200, for example, on the side frame 230, but is not limited thereto.

In addition, a venting valve 252 may be installed in the venting hole 251. The venting valve 252 may be configured in various ways. For example, the venting valve 252 may be configured to close the venting hole 251 and open when the internal pressure of the pack case 200 exceeds a preset value.

That is, the venting valve 252 normally blocks the venting hole 251, but when gas leaks from the battery cell 110 and then the internal pressure of the pack case 200 exceeds a preset value or range, the venting valve 252 may open, so that the gas may be discharged from the pack case 200 through the venting hole 251.

As described above, when the upper frame 210 is deformed upward by the flame and gas generated from the battery cell 110 to form the buffer space 500, the gas may move to the venting unit 250 through the buffer space 500, and the venting valve 252 may be opened by the pressure of the gas, thereby discharging the gas to the outside the pack case 200.

That is, the buffer space 500 formed by the deformation of the upper frame 210 may facilitate the venting to easily discharge the gas.

In addition, as described above, as the heat spreads to other battery modules 100 through the buffer space 500, the heat may be prevented from being concentrated in a specific battery module 100, thereby enabling a uniform thermal distribution.

In addition, since the gas discharge is facilitated by the buffer space 500 formed between the upper frame 210 and the battery module 100, the thermal runaway may be prevented by preventing the chain reaction of flames due to flame propagation.

FIG. 8 is a drawing illustrating a vehicle including a battery pack 10 according to embodiments of the present disclosure.

Referring to FIG. 8, a vehicle 20 according to an embodiment of the present disclosure may include one or more battery packs 10 according to the respective embodiments described above. Here, the vehicle 20 includes various vehicles that are designed to use electricity, such as an electric vehicle or a hybrid vehicle.

Although terms indicating directions, such as up, down, left, and right, are used in this specification, it is obvious to those skilled in the art to which the present disclosure pertains that these terms are only for convenience of explanation with reference the relevant drawings and may vary depending on the position of the target object or the position of the observer.

As described above, although the present disclosure has been described with reference to limited embodiments and drawings, the present disclosure is not limited thereto, and various modifications and variations are possible within the technical idea of the present disclosure and the scope of equivalence of the claims to be described below by those skilled in the art to which the present disclosure pertains. Therefore, the previously disclosed embodiments should be considered as those intended to describe the present disclosure, instead of those intended to limit the present disclosure. That is, the true scope of the technical idea of the present disclosure is shown in the claims, and all differences within the scope equivalent thereto should be construed as being included in the present disclosure.

### INDUSTRIAL APPLICABILITY

The present disclosure relates to a battery pack and a vehicle including the same, and is particularly applicable to industries related to secondary batteries.

## Claims

1. A battery pack comprising:
a plurality of battery modules having a plurality of battery cells stacked therein;
a pack case configured to store the plurality of battery modules; and
a fastening member configured to fasten the pack case,
wherein at least a portion of the fastening member is inserted and fixed into the pack case, and at least a portion thereof melts or burns when temperature rises.

2. The battery pack according to claim 1,
wherein a coupling hole is formed in the pack case,
wherein the fastening member comprises a bolt and a first nut, and
wherein the first nut is made of a melting or burning material and is inserted and fixed into the coupling hole of the pack case.

3. The battery pack according to claim 2,
wherein the first nut is coupled to the coupling hole of the pack case by fitting.

4. The battery pack according to claim 2,
wherein the first nut is made of plastic.

5. The battery pack according to claim 4,
wherein a bushing is coupled to the pack case on an upper side of the first nut to prevent damage to the first nut and increase fixing force.

6. The battery pack according to claim 5,
wherein the bolt is coupled to the first nut by passing through the bushing.

7. The battery pack according to claim 5,
wherein the bushing is welded to the pack case.

8. The battery pack according to claim 5,
wherein an outer diameter of the bushing is greater than an outer diameter of the first nut.

9. The battery pack according to claim 2,
wherein the pack case comprises:
an upper frame; and
a partition frame fastened to the upper frame by the fastening member,
wherein the coupling hole is formed in the partition frame, and
wherein the first nut is inserted and fixed into the coupling hole of the partition frame.

10. The battery pack according to claim 9,
wherein the fastening member comprises a second nut coupled to the upper frame, and
wherein the bolt is fastened to both the first nut and the second nut.

11. The battery pack according to claim 10,
wherein the second nut is welded to the upper frame.

12. The battery pack according to claim 10,
wherein the second nut is in a separated state from the partition frame.

13. The battery pack according to claim 12,
wherein, if a flame occurs in the battery cell and if the first nut melts, the bolt is separated from the partition frame, and the upper frame is deformed upward, so that a buffer space is formed between the upper frame and the battery module.

14. The battery pack according to claim 9,
wherein a venting unit is formed in the pack case, and
wherein gas generated from the battery cell moves to the venting unit if the upper frame is deformed.

15. A vehicle comprising at least one battery pack according to any one of claims 1 to 14.
